# EUROPÄISCHE PATENTANMELDUNG

(11) **EP 4 488 045 A2**
(43) Veröffentlichungstag der Anmeldung: **08.01.2025**
(21) Anmeldenummer: 24183298.9
(22) Anmeldetag: 20.06.2024
(51) Int. Cl.: B30B 3/04, B21B 37/00, B29C 43/24, B30B 15/26, B30B 15/28, B32B 41/00, H01M 10/04, B30B 15/30

(54) **VERFAHREN ZUM KALANDRIEREN EINES ELEKTRODENBANDES UND KALANDRIERVORRICHTUNG**

(30) Priorität: 04.07.2023 DE 102023206347
(71) Anmelder: VOLKSWAGEN AG, 38440 Wolfsburg (DE)
(72) Erfinder: Bußwinkel, Ludger, 38106 Braunschweig (DE); Meyer, Dr. Chris, 38110 Braunschweig (DE); Pietsch, Tommy, 38102 Braunschweig (DE); Dersch, Sebastian, 38106 Braunschweig (DE)

(57) **Zusammenfassung**

Die Erfindung betrifft ein Verfahren zum Kalandrieren eines Elektrodenbandes mit einem Kalandrierprozess, bei dem ein Elektrodenband (37) durch einen Walzenspalt (15) eines Walzenpaares (9) einer Kalandriervorrichtung (1) hindurchgeführt wird, und zwar unter Verdichtung des Elektrodenbandes (37), bei welchem Kalandrierprozess ein Fehlstellen-Erkennungsschritt durchgeführt wird, bei der zumindest eine Fehlstelle (39) des Elektrodenbandes (37) mittelbar oder unmittelbar erkannt wird, und bei welchem Kalandrierprozess, sofern bei dem Fehlstellen-Erkennungsschritt eine Fehlstelle (39) erkannt wird, das Walzenpaar (9), und zwar bevor die Fehlstelle (39) den Walzenspalt (15) erreicht, in einem Öffnungsschritt von einer Kalandrierstellung des Walzenpaares (9) in eine Offenstellung des Walzenpaares (9) verstellt wird. Erfindungsgemäß wird der Fehlstellen-Erkennungsschritt und/oder der Öffnungsschritt, vorzugsweise automatisch oder vollautomatisch, mittels eines Steuer- und/oder Regelsystems der Kalandriervorrichtung (1) durchgeführt.

## Beschreibung

Die Erfindung betrifft ein Verfahren zum Kalandrieren eines Elektrodenbandes nach dem Oberbegriff des Anspruches 1 sowie gemäß dem Anspruch 10 eine Kalandriervorrichtung.

Bei einem gattungsgemäßen Verfahren zum Kalandrieren eines Elektrodenbandes wird ein Kalandrierprozess durchgeführt, bei dem ein Elektrodenband durch einen Walzenspalt eines Walzenpaares einer Kalandriervorrichtung hindurchgeführt wird. Beim Hindurchführen wird das Elektrodenband unter sehr hohem Walzendruck zwischen massiven Stahlwalzen des Walzenpaares verdichtet. Das Elektrodenband kann fertigungsbedingt Fehlstellen aufweisen, wie bspw. eine Spleißverbindung oder Oberflächendefekte des Elektrodenbandes. Werden diese Fehlstellen ohne weitere Vorkehrungen durch den Walzenspalt hindurchgeführt, so können aufgrund des hohen Walzendruckes erhebliche Beschädigungen an dem Walzenpaar auftreten. Um solche Beschädigungen zu verhindern, wird der Kalandrierprozess bisher von einem Werker manuell überwacht. Erkennt der Werker eine Fehlstelle, so unterbricht der Werker den Kalandrierprozess, verstellt das Walzenpaar von einer Kalandrierstellung in eine Offenstellung, führt die Fehlstelle durch den Walzenspalt, verstellt das Walzenpaar in die Kalandrierstellung und startet den Kalandrierprozess erneut.

Dies hat den Nachteil, dass mit dem Verfahren aufgrund der vielen manuellen Unterbrechungen nur eine sehr begrenzte Gesamtanlageneffektivität erreichbar ist.

Aus der DE 11 2019 001 631 T5 sind eine Rollenpressmaschine, ein Steuer- und/oder Regelungssystem einer Rollenpressmaschine und ein Steuer- und/oder Regelungsverfahren einer Rollenpressmaschine bekannt. Mittels eines Positionssensors wird eine Vorderkante eines Werkstücks erfasst, bevor die Vorderkante in einen Rollenspalt der Rollenpressmaschine eintritt.

Die Aufgabe der Erfindung besteht darin, ein Verfahren zum Kalandrieren eines Elektrodenbandes bereitzustellen, mit dem eine im Vergleich zu dem bekannten Verfahren höhere Gesamtanlageneffektivität erreichbar ist. Eine weitere Aufgabe besteht darin, eine Kalandriervorrichtung bereitzustellen, mit der das Verfahren zum Kalandrieren eines Elektrodenbandes kosteneffizient durchführbar ist.

Diese Aufgaben sind durch die Merkmale der unabhängigen Ansprüche gelöst. Bevorzugte Weiterbildungen der Erfindung sind in den Unteransprüchen offenbart.

Erfindungsgemäß vorgeschlagen ist ein Verfahren zum Kalandrieren eines Elektrodenbandes mit einem Kalandrierprozess, bei dem ein Elektrodenband durch einen Walzenspalt eines Walzenpaares einer Kalandriervorrichtung hindurchgeführt wird, und zwar unter Verdichtung des Elektrodenbandes, bei welchem Kalandrierprozess ein Fehlstellen-Erkennungsschritt durchgeführt wird, bei der zumindest eine Fehlstelle des Elektrodenbandes mittelbar oder unmittelbar erkannt wird, und bei welchem Kalandrierprozess, sofern bei dem Fehlstellen-Erkennungsschritt eine Fehlstelle erkannt wird, das Walzenpaar, und zwar bevor die Fehlstelle den Walzenspalt erreicht, in einem Öffnungsschritt von einer Kalandrierstellung des Walzenpaares in eine Offenstellung des Walzenpaares verstellt wird. Erfindungsgemäß wird der Fehlstellen-Erkennungsschritt und/oder der Öffnungsschritt, vorzugsweise automatisch oder vollautomatisch, mittels eines Steuer- und/oder Regelsystems der Kalandriervorrichtung durchgeführt. Durch des mittels dem Steuer- und/oder Regelsystem durchgeführten Fehlstellen-Erkennungsschrittes und/oder des Öffnungsschrittes ist weder eine manuelle Überwachung des Verfahrens, noch sind manuelle Unterbrechungen erforderlich. Außerdem ist durch den automatischen Öffnungsschritt gewährleistet, dass die Fehlstelle störkonturfrei und damit für das Walzenpaar beschädigungsfrei durch den Walzenspalt führbar ist.

Beispielhaft kann vorgesehen sein, dass unter einer mittelbaren Erkennung der Fehlstelle verstanden wird, dass die Fehlstelle und/oder die Position der Fehlstelle anhand einer Markierung, vorzugsweise anhand einer Markierung, vorzugsweise anhand einer Farbmarkierung, erkannt wird. Beispielhaft kann vorgesehen sein, dass unter einer unmittelbaren Erkennung der Fehlstelle verstanden wird, dass die Fehlstelle und/oder die Position der Fehlstelle mittels eines Sensors, vorzugsweise mittels CCD-Sensors, direkt und/oder anhand der Fehlstelle selbst, erkannt und/oder detektiert wird.

Bevorzugt kann vorgesehen sein, dass in der Kalandrierstellung des Walzenpaares der Walzenspalt eine Kalandrier-Spaltbreite aufweist, und/oder dass in der Offenstellung des Walzenpaares der Walzenspalt eine Fehlstellen-Spaltbreite aufweist.

Besonders bevorzugt kann vorgesehen sein, dass die Fehlstelle im Fehlstellen-Erkennungsschritt kategorisiert wird, wobei die Fehlstelle entweder als walzengefährdend oder als nicht walzengefährdend kategorisiert wird. Wird eine nicht walzengefährdende Fehlstelle erkannt, so wird kein Öffnungsschritt und/oder auch kein Schließschritt durchgeführt und der Kalandrierprozess läuft unverändert weiter. Somit wird nicht für jede Fehlstelle, sondern nur für eine walzengefährdete Fehlstelle der Kalandrierprozess unterbrochen oder verlangsamt. Die Gesamtanlageneffektivität hängt bei dem Verfahren somit in vorteilhafter Weise tatsächlich nur von Fehlstellen ab, die auch walzengefährdend sind.

Bei einer bevorzugten Ausführungsform kann vorgesehen sein, dass das Steuer- und/oder Regelsystem einen Datenspeicher aufweist, und dass eine Datenspeicher-Positionsinformation über die Position der Fehlstelle des Elektrodenbandes, vorzugsweise in Bezug auf das Elektrodenband und/oder eine Längsrichtung des Elektrodenbandes, in dem Datenspeicher gespeichert ist, und dass eine Steuer- und/oder Regeleinheit des Steuer- und/oder Regelsystems die Datenspeicher-Positionsinformation, vorzugsweise bei dem Fehlstellen-Erkennungsschritt und/oder zur Erkennung der Fehlstelle, als Datenspeichersignal abruft und/oder erhält. Die Datenspeicher-Positionsinformation stellt eine digitale Markierung dar, die bspw. dazu genutzt werden kann, dass eine Bandgeschwindigkeit des Elektrodenbandes vorzeitig reduziert wird, und zwar bevorzugt bevor eine physische Markierung, bspw. in Form einer Farbmarkierung, von dem Steuer- und/oder Regelsystem erkannt, vorzugsweise detektiert wird.

Bei einer besonders bevorzugten Ausführungsform kann vorgesehen sein, dass das Steuer- und/oder Regelsystem einen Sensor aufweist, und dass die Position der Fehlstelle des Elektrodenbandes, vorzugsweise in Bezug auf das Elektrodenband und/oder eine Längsrichtung des Elektrodenbandes, mittels des Sensors erkannt, bevorzugt detektiert, wird, und dass eine Sensor-Positionsinformation über die Position der Fehlstelle in dem Fehlstellen-Erkennungsschritt als Sensorsignal von dem Sensor an die Steuer- und/oder Regeleinheit des Steuer- und/oder Regelsystems übermittelt wird. Die Sensor-Positionsinformation stellt eine zur Datenspeicher-Positionsinformation redundante Positionsinformation dar. Dies hat den Vorteil, dass die Zuverlässigkeit der Fehlstellen-Erkennung erheblich gesteigert ist.

Bei einer beispielhaften Ausführungsform kann vorgesehen sein, dass der Sensor durch einen Farbsensor oder einen CCD-Sensor gebildet ist, und dass vorzugsweise auf oder parallel zu der zumindest einen Fehlstelle eine Markierung, vorzugsweise eine Farbmarkierung, aufgebracht ist, und dass die Position der Fehlstelle des Elektrodenbandes, vorzugsweise in Bezug auf das Elektrodenband und/oder eine Längsrichtung des Elektrodenbandes, mittels des Farbsensors oder des CCD-Sensors anhand der auf der Fehlstelle aufgebrachten Markierung, vorzugsweise Farbmarkierung, erkannt, bevorzugt detektiert, wird. Die Farbmarkierung stellt eine physische Markierung dar. Die Farbmarkierung hat bspw. im Vergleich zu einer allgemeinen sensorischen Erkennung den Vorteil, dass die Farbmarkierung auf einfache Weise und vor allem besonders prozesssicher detektierbar ist.

Exemplarisch kann vorgesehen sein, dass die Position der zumindest einen Fehlstelle direkt von dem CCD-Sensor, vorzugsweise in einem Oberflächenkontrollprozess, detektiert wird, wobei bevorzugt vorgesehen sein kann, dass die Position der Fehlstelle nicht über eine Markierung oder Farbmarkierung, sondern direkt und/oder anhand der Fehlstelle selbst und/oder ohne eine vorher angebrachte Markierung mittels des CCD-Sensors erkannt und/oder detektiert wird. Beispielhaft kann vorgesehen sein, dass die zumindest eine Fehlstelle, vorzugsweise direkt und/oder unmittelbar, vor dem Walzenspalt von dem CCD-Sensor erkannt und/oder detektiert wird.

Beispielhaft kann vorgesehen sein, dass die Markierung, vorzugsweise die Farbmarkierung, vorzugsweise zumindest bei den Fehlstellen, bei denen ein Klebeband zumindest teilweise freiliegt, durch das Klebeband gebildet ist. Dies hat den Vorteil, dass keine gesonderte Markierung, vorzugsweise Farbmarkierung, oder kein zusätzlicher Klebesticker an einer Spleißverbindung erforderlich ist, um die Spleißverbindung als Fehlstelle zu markieren. Stattdessen wird die Fehlstelle in Form der Spleißverbindung direkt anhand des Klebebandes und/oder dessen Farbe erkannt und/oder detektiert. Das Klebeband kann daher bevorzugt dieselbe Farbe aufweisen wie die Farbmarkierung oder ein die Farbmarkierung bildender Klebesticker.

Bei einer exemplarischen Ausführungsform kann vorgesehen sein, dass das Steuer- und/oder Regelsystem eine Abwickel-Spleißvorrichtung aufweist, und dass die Position der Fehlstelle des Elektrodenbandes, vorzugsweise in Bezug auf das Elektrodenband und/oder eine Längsrichtung des Elektrodenbandes, mittels der Abwickel-Spleißvorrichtung erkannt, bevorzugt detektiert, wird, und dass eine Spleiß-Positionsinformation über die Position der Fehlstelle in dem Fehlstellen-Erkennungsschritt als Spleißsignal von der Abwickel-Spleißvorrichtung an die Steuer- und/oder Regeleinheit des Steuer- und/oder Regelsystems übermittelt wird. Zusätzlich oder alternativ kann daher auch über die Abwickel-Spleißvorrichtung eine Positionsinformation ermittelt werden. Die Prozesssicherheit bei der Fehlstellen-Erkennung ist dadurch, und im Vergleich zu einer Fehlstellen-Erkennung nur anhand der Datenspeicher- und/oder Sensor-Positionsinformation, noch weiter gesteigert.

Bevorzugt kann vorgesehen sein, dass die Datenspeicher-Positionsinformation durch die Spleiß-Positionsinformation gebildet ist. Das heißt, dass die Spleiß-Positionsinformation auch als Datenspeicher-Positionsinformation in dem Datenspeicher abgelegt sein kann. In diesem Fall wird die Spleiß-Positionsinformation als Spleißsignal an den Datenspeicher übermittelt und dort abgespeichert. Dies hat den Vorteil, dass nicht zwingend eine unmittelbare Signalverbindung zwischen dem Abwickel-Spleißvorrichtung und der Steuer- und/oder Regeleinheit bestehen muss.

Bei einer bevorzugten Ausführungsform kann vorgesehen sein, dass das Steuer- und/oder Regelsystem die Steuer- und/oder Regeleinheit aufweist, und dass die Datenspeicher-Positionsinformation als Datenspeichersignal und/oder die Sensor-Positionsinformation als Sensorsignal und/oder die Spleiß-Positionsinformation als Spleißsignal an die Steuer- und/oder Regeleinheit übermittelt wird und, vorzugsweise die Signale, in der Steuer- und/oder Regeleinheit zu einer Ansteuerinformation verarbeitet werden, und dass die Ansteuerinformation als Öffnungssignal an einen Aktuator des Steuer- und/oder Regelsystems übermittelt wird, und dass der Aktuator im Öffnungsschritt mittels des Öffnungssignals derart angesteuert wird, dass das Walzenpaar mittels des Aktuators von der Kalandrierstellung in die Offenstellung verstellt wird. In der Steuer- und/oder Regeleinheit werden die Positionsinformationen daher je nach Verfügbarkeit weiterverarbeitet. Bei der Weiterverarbeitung der Signale können in vorteilhafter Weise die Positionsinformationen miteinander verglichen werden und die Genauigkeit der Positionsbestimmung der Fehlstelle dadurch gesteigert werden.

Bei einer besonders bevorzugten Ausführungsform kann vorgesehen sein, dass der Aktuator mittels des Ansteuersignals derart von der Steuer- und/oder Regeleinheit angesteuert wird, dass das Walzenpaar in die Offenstellung verstellt ist, bevor die zumindest eine Fehlstelle den Walzenspalt erreicht, und/oder dass der Aktuator mittels des Ansteuersignals derart von der Steuer- und/oder Regeleinheit angesteuert wird, dass das Walzenpaar in die Offenstellung verstellt wird, nach dem ein Fehlstellen-Vorlaufbandabschnitt des Elektrodenbandes den Walzenspalt erreicht hat. Mittels des Aktuators ist eine besonders kostengünstige Verstellbarkeit des Walzenspaltes ermöglicht.

Beispielhaft kann vorgesehen sein, dass der Fehlstellen-Vorlaufbandabschnitt des Elektrodenbandes unmittelbar an die Fehlstelle angrenzt und/oder den Walzenspalt vor der Fehlstelle erreicht.

Exemplarisch kann vorgesehen sein, dass der Fehlstellen-Vorlaufbandabschnitt nach Durchlaufen des Walzenspaltes unverdichtet oder nicht vollständig verdichtet ist.

Bevorzugt kann vorgesehen sein, dass der Fehlstellen-Vorlaufbandabschnitt, bevorzugt in Laufrichtung und/oder parallel zur Laufrichtung gesehen, eine Vorlauf-Bandabschnittslänge aufweist, und dass der Betrag der Vorlauf-Bandabschnittslänge, bevorzugt bei einer Bandgeschwindigkeit des Elektrodenbandes in einem Bereich von 25 m/min bis 150 m/min, in einem Bereich von 5 cm bis 150 cm, bevorzugt in einem Bereich von 10 cm bis 30 cm, besonders bevorzugt bei 20 cm liegt.

Insbesondere die Vorlauf-Bandabschnittslänge von 20 cm stellt einen guten Kompromiss dar, zwischen geringem Ausschuss des Elektrodenbandes und der Sicherstellung, dass keine Beschädigungen an dem Walzenpaar auftreten.

Bei einer exemplarischen Ausführungsform kann vorgesehen sein, dass eine Bahngeschwindigkeit des Elektrodenbandes mittels des Steuer- und/oder Regelsystems von einer Kalandrier-Bandgeschwindigkeit bis auf eine Fehlstellen-Bandgeschwindigkeit reduziert ist, bevor die Fehlstelle den Walzenspalt erreicht. Alternativ oder zusätzlich kann vorgesehen sein, dass die Bahngeschwindigkeit des Elektrodenbandes mittels des Steuer- und/oder Regelsystems von der Kalandrier-Bandgeschwindigkeit bis auf die Fehlstellen-Bandgeschwindigkeit reduziert wird, nach dem der Fehlstellen-Vorlaufbandabschnitt den Walzenspalt erreicht hat. Durch die Reduzierung der Bahngeschwindigkeit kann die Menge an Ausschuss von Elektrodenband in unkalandriertem Zustand vor und nach der Fehlstelle reduziert werden.

Bei einer beispielhaften Ausführungsform kann vorgesehen sein, dass das Verfahren einen Schließschritt aufweist, und dass bei dem Schließschritt die Steuer- und/oder Regeleinheit ein Schließsignal generiert und an den Aktuator übermittelt, und dass der Aktuator im Schließschritt mittels des Schließsignals derart angesteuert wird, dass das Walzenpaar mittels des Aktuators von der Offenstellung in die Kalandrierstellung verstellt wird, wobei bevorzugt vorgesehen sein kann, dass der Aktuator mittels des Schließsignals derart von der Steuer- und/oder Regeleinheit angesteuert wird, dass das Walzenpaar in die Kalandrierstellung verstellt ist, sobald ein Fehlstellen-Nachlaufbandabschnitt des Elektrodenbandes den Walzenspalt verlassen hat, und/oder wobei bevorzugt vorgesehen sein kann, dass der Aktuator mittels des Schließsignals derart von der Steuer- und/oder Regeleinheit angesteuert wird, dass das Walzenpaar von der Offenstellung in die Kalandrierstellung verstellt wird, nach dem die zumindest eine Fehlstelle den Walzenspalt verlassen hat. Durch den Schließschritt ist ermöglicht, dass der Kalandrierprozess, nach dem die Fehlstelle den Walzenspalt passiert, wieder automatisch weitergeführt wird. Die Dauer der Unterbrechungen ist daher auf ein Minimum reduziert, so dass mit dem Verfahren eine hohe Gesamtanlageneffektivität realisierbar ist.

Exemplarisch kann vorgesehen sein, dass der Schließschritt, vorzugsweise automatisch oder vollautomatisch, mittels des Steuer- und/oder Regelsystems der Kalandriervorrichtung durchgeführt wird. Das Verfahren ist somit vollautomatisch durchführbar.

Beispielhaft kann vorgesehen sein, dass der Fehlstellen-Nachlaufbandabschnitt des Elektrodenbandes unmittelbar an die Fehlstelle angrenzt und/oder den Walzenspalt nach der Fehlstelle erreicht.

Exemplarisch kann vorgesehen sein, dass der Fehlstellen-Nachlaufbandabschnitt nach Durchlaufen des Walzenspaltes unverdichtet oder nicht vollständig verdichtet ist.

Bevorzugt kann vorgesehen sein, dass der Fehlstellen-Nachlaufbandabschnitt des Elektrodenbandes eine Nachlauf-Bandabschnittslänge aufweist, und dass der Betrag der Nachlauf-Bandabschnittslänge in einem Bereich von 5 cm bis 150 cm, bevorzugt in einem Bereich von 10 cm bis 30 cm, besonders bevorzugt bei 20 cm liegt. Insbesondere die Nachlauf-Bandabschnittslänge von 20 cm stellt einen guten Kompromiss dar, zwischen geringem Ausschuss des Elektrodenbandes und der Sicherstellung, dass keine Beschädigungen an dem Walzenpaar auftreten.

Bevorzugt kann vorgesehen sein, dass eine Bahngeschwindigkeit des Elektrodenbandes mittels des Steuer- und/oder Regelsystems vor dem Beginn und/oder vor dem Abschluss des Schließschrittes, vorzugsweise von Kalandrier-Bandgeschwindigkeit oder von der Fehlstellen-Bandgeschwindigkeit, auf null reduziert wird, wobei bevorzugt vorgesehen sein kann, dass das Elektrodenband mittels des Steuer- und/oder Regelsystems nach Abschluss des Schließschrittes von null auf die Kalandrier-Bahngeschwindigkeit erhöht wird. Erfindungsgemäß vorgeschlagen ist außerdem eine Kalandriervorrichtung, vorzugsweise zur Durchführung eines wie vorbeschriebenen Verfahrens, mit einem Walzenpaar, durch das ein Elektrodenband in einem Kalandrierprozess, vorzugsweise im Endlosverfahren, unter Verdichtung des Elektrodenbandes hindurchführbar ist, und einem Steuer- und/oder Regelsystem. Das Steuer- und/oder Regelsystem ist dazu geeignet und/oder dazu ausgebildet, bei dem Kalandrierprozess einen Fehlstellen-Erkennungsschritt, vorzugsweise automatisch oder vollautomatisch, durchzuführen und zumindest eine Fehlstelle auf dem Elektrodenband mittelbar oder unmittelbar zu erkennen. Alternativ oder zusätzlich ist das Steuer- und/oder Regelsystem dazu geeignet und/oder dazu ausgebildet, das Walzenpaar bei erkannter Fehlstelle, vorzugsweise automatisch oder vollautomatisch, von einer Kalandrierstellung des Walzenpaares, bei der vorzugsweise der Walzenspalt eine Kalandrier-Spaltbreite aufweist, in eine Offenstellung des Walzenpaares zu verstellen, bei der vorzugsweise der Walzenspalt eine Fehlstellen-Spaltbreite aufweist. Für die Kalandriervorrichtung gelten dieselben Vorteile wie für das Verfahren.

Bevorzugt kann vorgesehen sein, dass das Elektrodenband ein Trägerelement und zumindest eine Beschichtung aufweist. Besonders bevorzugt kann vorgesehen sein, dass das Trägerelement durch eine Trägerfolie gebildet ist, wobei bevorzugt vorgesehen sein kann, dass die Trägerfolie ausschließlich oder zumindest teilweise Aluminium und/oder Kupfer aufweist.

Beispielhaft kann vorgesehen sein, dass die Beschichtung Aktivmaterial und/oder Bindemittel aufweist.

Exemplarisch kann vorgesehen sein, dass die Kalandrier-Spaltbreite so eingestellt wird, dass die Dicke des verdichteten Elektrodenbandes 0,05 mm bis 0,5 mm beträgt.

Bevorzugt kann vorgesehen sein, dass die Bezeichnungen Ober- und Unterwalze nicht als Raumrichtungsangaben zu verstehen sind, sondern dass die Unterwalze lediglich als eine, vorzugsweise irgendwie angeordnete, erste Walze und die Oberwalze lediglich als eine, vorzugsweise irgendwie angeordnete, zweite Walze bezeichnet werden kann.

Nachfolgend sind Ausführungsformen der Erfindung anhand der beigefügten Figuren beschrieben.

Es zeigen:
- Figur 1: in einer schematischen Seitenschnittansicht eine Kalandriervorrichtung;
- Figuren 2 und 3: jeweils in einer schematischen Seitenansicht eine Fehlstelle eines Elektrodenbandes;
- Figur 4: in einer schematischen Seitenansicht einen Beschichtungsfehler des Elektrodenbandes, und
- Figuren 5 und 6: jeweils in einer schematischen Seitenansicht eine Spleißverbindung des Elektrodenbandes.

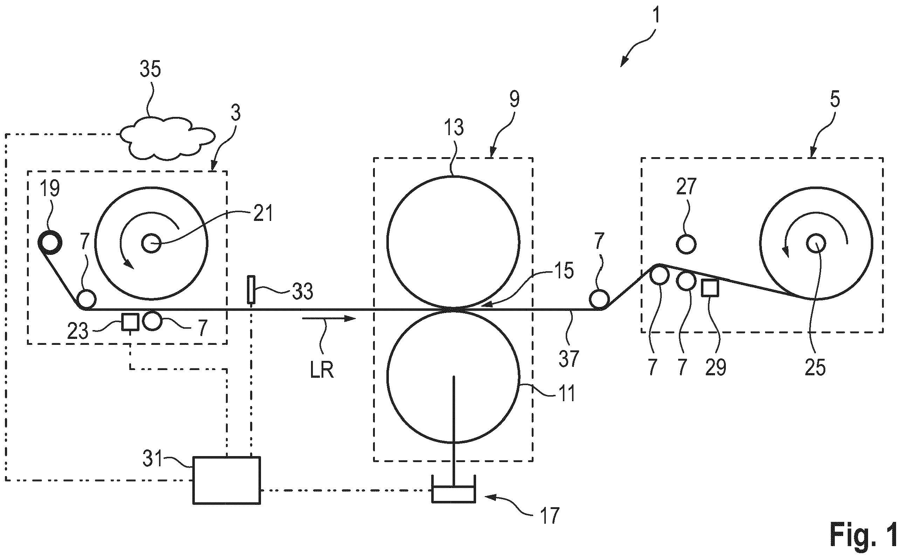

In der Figur 1 ist eine Kalandriervorrichtung 1 dargestellt. Die Kalandriervorrichtung 1 weist eine Abwickeleinheit 3 und eine Aufwickeleinheit 5 auf. Ferner weist die Kalandriervorrichtung 1 Führungsrollen 7 und ein Walzenpaar 9 auf. Das Walzenpaar 9 weist eine, durch eine zylinderförmige Metallwalze gebildete, Unterwalze 11 und eine, durch eine zylinderförmige Metallwalze gebildete, Oberwalze 13 auf. Die Unterwalze 11 ist an einen Aktuator 17 der Kalandriervorrichtung 1, hier beispielhaft an einen Hydraulikaktuator, angebunden. Alternativ ist es bei der beschriebenen oder einer anderen Ausführungsform der Kalandriervorrichtung 1 jedoch selbstverständlich auch möglich, den Aktuator 17 beispielhaft als elektromechanischen Aktuator auszubilden.

Die Abwickeleinheit 3 weist einen Abwickel-Wendewickler mit einem ersten Abwickelkern 19 und einem zweiten Abwickelkern 21 auf. Zusätzlich ist eine automatische Abwickel-Spleißvorrichtung 23 vorgesehen, die in dem Abwickel-Wendewickler angeordnet ist. Die Aufwickeleinheit 5 weist einen Aufwickel-Wendewickler mit einem ersten Aufwickelkern 25 und einem zweiten Aufwickelkern 27 sowie eine automatische Aufwickel-Spleißvorrichtung 29 auf.

Die Kalandriervorrichtung 1 weist ein Steuer- und/oder Regelsystem auf. Das Steuer- und/oder Regelsystem weist eine Steuer- und/oder Regeleinheit 31, einen Sensor 33, den Aktuator 17, die Abwickel-Spleißvorrichtung 23 und einen, hier lediglich beispielhaft als Cloud-Speicher ausgebildeten, Datenspeicher 35 auf. Der Sensor 33 ist, hier lediglich beispielhaft, durch einen Farbsensor gebildet. Alternativ ist es bei der beschriebenen oder einer anderen Ausführungsform der Kalandriervorrichtung 1 jedoch selbstverständlich auch möglich, den Sensor 33 als einen CCD-Sensor, das heißt als einen charge-coupled-device Sensor, auszubilden.

Die Steuer- und/oder Regeleinheit 31 steht in Signalverbindung mit dem Sensor 33 und steht in Signalverbindung mit dem Datenspeicher 35. Ferner steht die Steuer- und/oder Regeleinheit 31 in Signalverbindung mit dem Aktuator 17. Die Steuer- und/oder Regeleinheit 31 steht außerdem in Signalverbindung mit der Abwickel-Spleißvorrichtung 23. Die Signalverbindungen sind in der Figur 1 anhand der von der Steuer- und/oder Regeleinheit 31 ausgehenden Linien, vorzugsweise Strich-Punkt-Linien, veranschaulicht.

Zwischen der Unterwalze 11 und der Oberwalze 13 ist ein Walzenspalt 15 vorgesehen. Die Unterwalze 11 begrenzt den Walzenspalt 15 nach unten und die Oberwalze 13 begrenzt den Walzenspalt 15 nach oben. Der Walzenspalt 15 weist eine verstellbare Spaltbreite auf. Die Spaltbreite ist durch Verstellung der Unterwalze 11 mittels des von der Steuer- und/oder Regeleinheit 31 angesteuerten Aktuators 17 von einer Kalandrier-Spaltbreite, bei der sich das Walzenpaar 9 in einer Kalandrierstellung befindet, zu einer Fehlstellen-Spaltbreite, bei der sich das Walzenpaar 9 in einer Offenstellung befindet, und umgekehrt verstellbar.

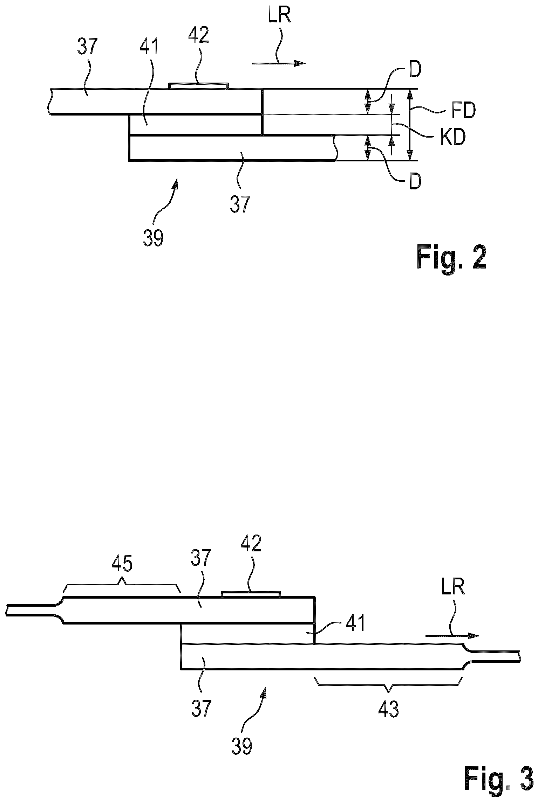

Der Betrag der Kalandrier-Spaltbreite ist geringer als der Betrag einer Banddicke D des Elektrodenbandes 37 in unkalandriertem Zustand, wie dies in Figur 2 dargestellt ist. Der Betrag der Fehlstellen-Spaltbreite ist vorzugsweise größer als eine, in der Figur 2 gezeigte, Fehlstellen-Dicke FD einer, in der Figur 2 vergrößert dargestellten, Fehlstelle 39.

Die Fehlstelle 39 ist in der Figur 2 lediglich beispielhaft durch eine Spleißverbindung gebildet. Mittels der Spleißverbindung wird das Elektrodenband 37 unterschiedlicher Elektrodencoils miteinander verbunden, und zwar durch Zwischenlage eines doppelseitigen Klebebandes 41 zwischen einem Ende des Elektrodenbandes 37 eines ersten und auf dem ersten Abwickelkern 19 angeordneten Elektrodencoils und einem Ende des Elektrodenbandes 37 eines zweiten und auf dem zweiten Abwickelkern 21 angeordneten Elektrodencoils. Im Bereich der Spleißverbindung ergibt sich die Fehlstelle-Dicke FD durch Addition der doppelten Banddicke D des Elektrodenbandes 37 und einer Dicke KD des Klebebandes 41. Alternativ zu einer Spleißverbindung kann die Fehlstelle 39 beispielhaft auch durch einen Oberflächendefekt und/oder durch ein Material-Agglomerat und/oder durch eine Blase gebildet sein.

Die Kalandriervorrichtung 1 ist dazu ausgebildet und dazu geeignet, in einem Verfahren das Elektrodenband 37 von einem unkalandrierten Zustand in einen kalandrierten Zustand zu verdichten. Das Elektrodenband 37 weist eine Trägerschicht (nicht dargestellt), bspw. gebildet durch eine aluminium- oder kupferhaltige Trägerfolie, sowie eine Beschichtung (nicht dargestellt) auf, die bspw. unter anderem ein Aktivmaterial und bspw. ein Bindemittel aufweist. Im unkalandrierten Zustand des Elektrodenbandes 37 kann bspw. die Porosität zu hoch sein, die durch das Kalandrieren und/oder Verdichten auf ein Optimum verringert wird. Das Elektrodenband 37 im kalandrierte und/oder verdichteten Zustand wird zur Herstellung von Elektroden für bspw. Lithium-Ionen Batterien weiter verarbeitet und ermöglicht im Vergleich zu Elektroden aus Elektrodenband in unkalandriertem Zustand höhere Energiedichten.

Neben den lediglich beispielhaft genannten Porositäten weist das Elektrodenband 37 hier lediglich beispielhaft zusätzlich die Fehlstelle 39 auf. Ist der Walzenspalt 15 auf die Kalandrier-Spaltbreite eingestellt und wird das Elektrodenband 37 mit der Fehlstelle 39 durch den Walzenspalt 15 geführt, so wird das Walzenpaar 9 beschädigt. Beispielhaft kann die Beschädigung darin bestehen, dass zumindest die Unterwalze 11 oder zumindest die Oberwalze 13 verformt wird, oder dass sowohl die Unterwalze 11 als auch die Oberwalze 13 verformt werden.

Um durch die Fehlstelle 39 verursachte Beschädigungen am Walzenpaar 9 zu verhindern, wird das Walzenpaar 9 mittels des Steuer- und/oder Regelsystems der Kalandriervorrichtung 1 vollautomatisch und bevor die Fehlstelle 39 den Walzenspalt 15 erreicht von der Kalandrierstellung des Walzenpaares 9 in die Offenstellung des Walzenpaares 9 verstellt. In der Offenstellung des Walzenpaares 9 kann die Fehlstelle 39 den Walzenspalt störkonturfrei passieren und es treten keine Beschädigungen am Walzenpaar 9 auf. Hat die Fehlstelle 39 dann das Walzenpaar 9 in Laufrichtung LR gesehen passiert, so wird das Walzenpaar 9 mittels des Steuer- und/oder Regelsystems von der Offenstellung wieder zurück in die Kalandrierstellung verstellt.

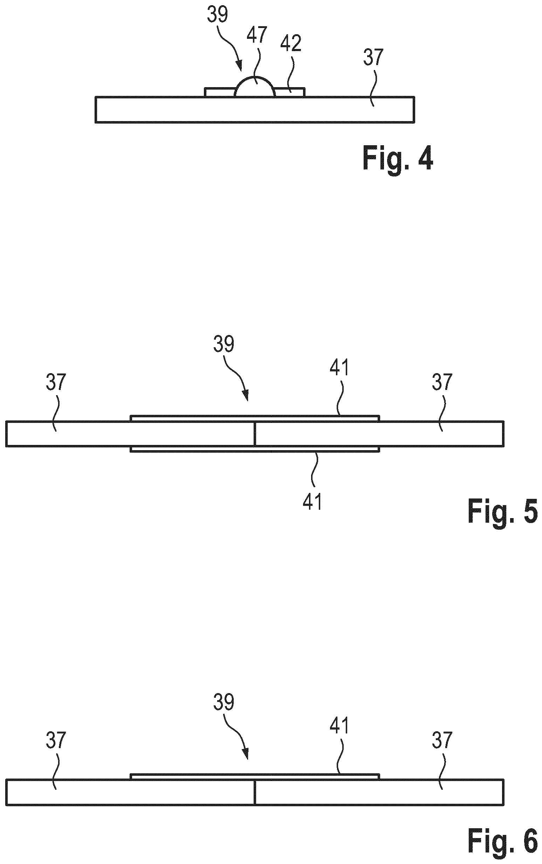

In der Figur 4 ist die Fehlstelle 39 lediglich beispielhaft durch einen Beschichtungsfehler 47 in Form einer Blase gebildet. Der Beschichtungsfehler 47 bzw. die Blase können von den Walzen des Walzenpaares 9 nicht verdichtet werden, ohne dass das Walzenpaar 9 beschädigt wird. Deshalb wird auch bei einem solchen Beschichtungsfehler 47 der Walzenspalt 15 geöffnet.

In den Figuren 5 und 6 ist die Fehlstelle 39 durch unterschiedliche Arten von Spleißverbindungen gebildet. In der Figur 5 ist ein Streifen des Klebebandes 41 auf einer Oberseite der Spleißverbindung zwischen dem Elektrodenband 37 und ein Streifen des Klebebandes 41 auf einer Unterseite der Spleißverbindung zwischen dem Elektrodenband 37 aufgebracht. Das Klebeband 41 liegt in diesen Fällen jeweils frei und kann von dem Sensor 33, vorzugsweise von dem Farbsensor, detektiert werden. Da das Klebeband 41 frei liegt und von dem Sensor 33, vorzugsweise dem Farbsensor, erkannt wird, erfüllt das Klebeband 41 neben der Verbindung des Elektrodenbandes der beiden Elektrodencoils eine Doppelfunktion, und zwar dadurch, dass das Klebeband 41 zusätzlich eine mittels des Sensors 33 detektierbare Markierung der Spleißverbindung und damit der Fehlstelle 39 bildet. Eine Farbmarkierung, vorzugsweise eine Klebesticker, ist dann nicht erforderlich, kann aber optional zusätzlich vorgesehen sein. Gleiches gilt für die in der Figur 6 dargestellte Spleißverbindung, die sich von der Spleißverbindung der Figur 5 lediglich dadurch unterscheidet, dass das Klebeband 41 nur auf der Oberseite der Spleißverbindung aufgeklebt ist, wohingegen bei der Spleißverbindung der Figur 6 an der Unterseite der Spleißverbindung kein Klebeband vorgesehen ist.

Das Verfahren ist nachfolgend anhand der Figur 1 im Detail erläutert. Das Verfahren weist einen Bereitstellungsschritt und einen Kalandrierprozess auf. Bei dem Bereitstellungsschritt wird die Kalandriervorrichtung 1 und das Elektrodenband 37 bereitgestellt. Bei dem Kalandrierprozess wird das Elektrodenband 37 mit einer Bandgeschwindigkeit des Elektrodenbandes 37 durch den Walzenspalt 15 des Walzenpaares 9 der Kalandriervorrichtung 1 hindurchgeführt, und zwar unter Verdichtung des Elektrodenbandes 37 von einem unkalandrierten Zustand in einen kalandrierten, das heißt verdichteten, Zustand.

Während dem Kalandrierprozess wird mittels des Steuer- und/oder Regelsystems vollautomatisch ein Fehlstellen-Erkennungsschritt durchgeführt, bei dem die Fehlstelle 39 erkannt wird. Zusätzlich wird während des Kalandrierprozesses, sofern bei dem Fehlstellen-Erkennungsschritt die Fehlstelle 39 erkannt wurde, das Walzenpaar 9, bevor die Fehlstelle 39 den Walzenspalt 15 erreicht, von dem Steuer- und/oder Regelsystem vollautomatisch in einem Öffnungsschritt von der Kalandrierstellung des Walzenpaares 9 in die Offenstellung des Walzenpaares 9 verstellt.

Die Fehlstelle 39 wird in dem Fehlstellen-Erkennungsschritt mittels einer digitalen Erkennung und/oder mittels einer physischen Erkennung erkannt, vorzugsweise detektiert. Bei der digitalen Erkennung ist in dem Datenspeicher 35 eine Datenspeicher-Positionsinformation über die Position der Fehlstelle 39, vorzugsweise in Bezug auf das Elektrodenband 37, gespeichert. Die Datenspeicher-Positionsinformation wird von der Steuer- und/oder Regeleinheit 31 des Steuer- und/oder Regelsystems als Datenspeichersignal abgerufen und empfangen. Die Datenspeicher-Positionsinformation zur Position der Fehlstelle 39 kann bspw. vorab manuell durch einen Werker oder vorzugsweise durch eine automatische Oberflächenkontrolle durch bspw. ein Kamerasystem mit CCD-Sensor in dem Datenspeicher abgespeichert werden. Dies kann bspw. bei einem Beschichtungs- und/oder Slittprozess zur Herstellung des Elektrodenbandes 37 erfolgen. Die Oberflächenkontrolle in einem dem Kalandrieren vorgelagerten Prozessschritt ist sinnvoll, um die Fehlstellen möglichst früh nach deren Entstehung zu erkennen, sodass bei einer unerwartet hohen Anzahl auftretender Fehlstellen unverzüglich Maßnahmen eingeleitet werden können.

Bei der physischen Erkennung wird die Position der Fehlstelle 39 mittels des durch den Farbsensor gebildeten Sensors 33 detektiert. Hierzu ist auf der Fehlstelle 39 oder parallel zur Fehlstelle 39 an einer definierten Stelle auf dem Elektrodenband 37 vorzugsweise am Rand des Elektrodenbandes 37 oder sogar mit einem Überstand über den Rand des Elektrodenbandes 37 hinausstehend eine Farbmarkierung aufgebracht, die in den Figuren 2 und 3 lediglich exemplarisch als Klebesticker 42 dargestellt ist. Die Farbmarkierung oder der Klebesticker 42 sind rein optional. Alternativ zu dem Klebesticker kann die Farbmarkierung in dieser oder in einer Ausführungsform des Verfahrens selbstverständlich auch bspw. durch einen Farbauftrag gebildet sein. Der Klebesticker kann bspw. vorab manuell durch einen Werker und/oder durch eine automatische Oberflächenkontrolle durch bspw. ein Kamerasystem mit CCD-Sensor und ein automatisches Fehlermarkierungssystem auf der Fehlstelle 39 oder parallel zur Fehlstelle 39 an einer definierten Stelle auf dem Elektrodenband 37 vorzugsweise am Rand des Elektrodenbandes 37 aufgebracht werden. Dies kann bspw. bei einem Beschichtungs- und/oder Slittprozess zur Herstellung des Elektrodenbandes 37 erfolgen. Die Oberflächenkontrolle in einem dem Kalandrieren vorgelagerten Prozessschritt ist sinnvoll, um die Fehlstellen möglichst früh nach deren Entstehung zu erkennen, sodass bei einer unerwartet hohen Anzahl auftretender Fehlstellen unverzüglich Maßnahmen eingeleitet werden können.

Die Position der Fehlstelle 39 wird mittels des Farbsensors anhand der auf der Fehlstelle 39 oder parallel zur Fehlstelle 39 an einer definierten Stelle auf dem Elektrodenband 37, vorzugsweise am Rand Elektrodenbandes 37, aufgebrachten Farbmarkierung detektiert. Anschließend wird eine Sensor-Positionsinformation über die Position der Fehlstelle 39, vorzugsweise in Bezug auf das Elektrodenband 37, als Sensorsignal von dem Sensor 33 an die Steuer- und/oder Regeleinheit 31 des Steuer- und/oder Regelsystems übermittelt.

Im Fall, wie hier lediglich beispielhaft beschrieben, dass die Fehlstelle 39 durch eine Spleißverbindung gebildet ist, übermittelt die Abwickel-Spleißvorrichtung 23 beim Durchführen eines Spleißvorganges eine der Position der Spleißverbindung, vorzugsweise in Bezug auf das Elektrodenband 37 oder in Bezug auf das übrige Elektrodenband 37, entsprechende Spleiß-Positionsinformation in Form eines Spleißsignals an die Steuer- und/oder Regeleinheit 31.

Der Steuer- und/oder Regeleinheit 31 stehen somit die Datenspeicher-Positionsinformation und die Sensor-Positionsinformation und die Spleiß-Positionsinformation zur Verfügung. Prinzipiell wäre es für das Verfahren ausreichend, dass der Steuer- und/oder Regeleinheit 31 nur eine oder nur zwei von den drei genannten Positionsinformationen zur Verfügung steht. Allerdings erhöht die Bereitstellung aller drei Positionsinformationen aufgrund von Redundanz der Informationen die Prozesssicherheit des Verfahrens und auch dessen Genauigkeit erheblich.

In der Steuer- und/oder Regeleinheit 31 werden die Datenspeicher-Positionsinformation und die Sensor-Positionsinformation zu einer Ansteuerinformation für den Aktuator 17 verarbeitet. Die Ansteuerinformation wird von der Steuer- und/oder Regeleinheit 31 als Öffnungssignal an den Aktuator übermittelt. Im Öffnungsschritt wird der Aktuator 17 mittels des Öffnungssignals derart angesteuert, dass das Walzenpaar 9, bevor die Fehlstelle den Walzenspalt erreicht, mittels des Aktuators 17 von der Kalandrierstellung in die Offenstellung verstellt wird.

Prinzipiell ist es auch möglich einen Sicherheitsabstand vor der Fehlstelle 39 einzuhalten und/oder vorzusehen. Hierzu wird der Aktuator 17 mittels des Ansteuersignals derart von der Steuer- und/oder Regeleinheit 31 angesteuert, dass das Verstellen des Walzenpaares 9 in die Offenstellung beginnt, nach dem ein Fehlstellen-Vorlaufbandabschnitt 43 des Elektrodenbandes 37 den Walzenspalt 15 erreicht hat.

Wie dies in der Figur 3 dargestellt ist, grenzt der Fehlstellen-Vorlaufbandabschnitt 43 des Elektrodenbandes 37 unmittelbar an die Fehlstelle 39 an und erreicht den Walzenspalt 15, in Laufrichtung LR gesehen, vor, insbesondere zeitlich vor, der Fehlstelle 39. Wie dies ebenfalls in der Figur 3 dargestellt ist, ist der Fehlstellen-Vorlaufbandabschnitt 43 nach Durchlaufen des Walzenspaltes 15 unverdichtet oder teilverdichtet. Der Fehlstellen-Vorlaufbandabschnitt 43 weist, bevorzugt in Laufrichtung LR gesehen und/oder parallel zur Laufrichtung LR gesehen, eine Vorlauf-Bandabschnittslänge von lediglich beispielhaft 20 cm auf.

Bevor die Fehlstelle 39 den Walzenspalt 15 erreicht, ist eine Bahngeschwindigkeit des Elektrodenbandes 37 mittels des Steuer- und/oder Regelsystems von einer Kalandrier-Bandgeschwindigkeit bereits bis auf eine Fehlstellen-Bandgeschwindigkeit reduziert. So kann der Ausschuss in Form von unkalandriertem Elektrodenband 37 vor und nach der Fehlstelle 39 verringert werden. Prinzipiell ist es möglich, dass die Reduzierung der Bahngeschwindigkeit des Elektrodenbandes mittels des Steuer- und/oder Regelsystems von der Kalandrier-Bandgeschwindigkeit bis auf die Fehlstellen-Bandgeschwindigkeit bereits beginnt, nach dem der Fehlstellen-Vorlaufbandabschnitt 43 den Walzenspalt 15 erreicht hat. Weitergehend ist es möglich, die Bandgeschwindigkeit bei geöffnetem Walzenspalt 15 für lange Elektrodenbandabschnitten mit Fehlstellen bspw. 200 m zu erhöhen.

Das Verfahren weist außerdem einen Schließschritt auf. Bei dem Schließschritt generiert die Steuer- und/oder Regeleinheit 31, nach dem die Fehlstelle 39 und/oder zumindest teilweise der Fehlstellen-Nachlaufbandabschnitt den Walzenspalt 15 passiert und/oder verlassen hat, ein Schließsignal und übermittelt das Schließsignal an den Aktuator 17. Mittels des Schließsignals wird der Aktuator 17 im Schließschritt derart angesteuert, dass das Walzenpaar 9 mittels des Aktuators 17 von der Offenstellung in die Kalandrierstellung verstellt wird.

Der Aktuator 17 wird im Schließschritt mittels des Schließsignals derart von der Steuer- und/oder Regeleinheit 31 angesteuert, dass das Walzenpaar 9 in die Kalandrierstellung verstellt ist, sobald der Fehlstellen-Nachlaufbandabschnitt 45 des Elektrodenbandes 37 den Walzenspalt 15 zumindest größtenteils verlassen hat. Zusätzlich wird der Aktuator 17 mittels des Schließsignals derart von der Steuer- und/oder Regeleinheit 31 angesteuert, dass das Walzenpaar 15 von der Offenstellung in die Kalandrierstellung verstellt wird, nach dem die Fehlstelle 39 den Walzenspalt 15 verlassen hat. Der Schließschritt wird mittels des Steuer- und/oder Regelsystems der Kalandriervorrichtung vollautomatisch durchgeführt.

Der Fehlstellen-Nachlaufbandabschnitt 45 des Elektrodenbandes 37 grenzt unmittelbar an die Fehlstelle 39 an und passiert und/oder erreicht den Walzenspalt 15 erst nach der Fehlstelle 39. Der Fehlstellen-Nachlaufbandabschnitt 45 ist nach Durchlaufen des Walzenspaltes 15 unverdichtet, vorzugsweise nur teilweise verdichtet, wie dies in der Figur 3 dargestellt ist. Der Fehlstellen-Nachlaufbandabschnitt 45 des Elektrodenbandes 37 weist eine Nachlauf-Bandabschnittslänge auf. Lediglich beispielhaft liegt der Betrag der Nachlauf-Bandabschnittslänge bei 20 cm.

In der Figur 3 sind der Fehlstellen-Vorlaufbandabschnitt 43 und der Fehlstellen-Nachlaufbandabschnitt 45 und die Fehlstelle 39 in einem Zustand dargestellt, nach dem der Fehlstellen-Vorlaufbandabschnitt 43 und der Fehlstellen-Nachlaufbandabschnitt 45 und die Fehlstelle 39 den Walzenspalt 15 passiert haben.

Vor Beginn des Schließschrittes wird die Bandgeschwindigkeit des Elektrodenbandes 37 mittels des Steuer- und/oder Regelsystems von der Fehlstellen-Bandgeschwindigkeit auf null reduziert und das Elektrodenband 37 somit angehalten. Dies soll das Zerreißen des Elektrodenbandes 37 beim Schließen des Walzenspalts 15 vorbeugen. Nach Abschluss des Schließschrittes wird die Bandgeschwindigkeit des Elektrodenbandes 37 dann von null wieder auf die Kalandrier-Bandgeschwindigkeit erhöht.

### Bezugszeichenliste

- 1: Kalandriervorrichtung
- 3: Abwickeleinheit
- 5: Aufwickeleinheit
- 7: Führungsrollen
- 9: Walzenpaar
- 11: Unterwalze
- 13: Oberwalze
- 15: Walzenspalt
- 17: Aktuator
- 19: erster Abwickelkern
- 21: zweiter Abwickelkern
- 23: Abwickel-Spleißvorrichtung
- 25: erster Aufwickelkern
- 27: zweiter Aufwickelkern
- 29: Aufwickel-Spleißvorrichtung
- 31: Steuer- und/oder Regeleinheit
- 33: Sensor
- 35: Datenspeicher
- 37: Elektrodenband
- 39: Fehlstelle
- 41: Klebeband
- 42: Klebesticker
- 43: Fehlstellen-Vorlaufbandabschnitt
- 45: Fehlstellen-Nachlaufbandabschnitt
- 47: Beschichtungsfehler
- LR: Laufrichtung

## Patentansprüche

1. Verfahren zum Kalandrieren eines Elektrodenbandes mit:
einem Kalandrierprozess, bei dem ein Elektrodenband (37) durch einen Walzenspalt (15) eines Walzenpaares (9) einer Kalandriervorrichtung (1) hindurchgeführt wird, und zwar unter Verdichtung des Elektrodenbandes (37),
bei welchem Kalandrierprozess ein Fehlstellen-Erkennungsschritt durchgeführt wird, bei der zumindest eine Fehlstelle (39) des Elektrodenbandes (37) mittelbar oder unmittelbar erkannt wird, und
bei welchem Kalandrierprozess, sofern bei dem Fehlstellen-Erkennungsschritt eine Fehlstelle (39) erkannt wird, das Walzenpaar (9), und zwar bevor die Fehlstelle (39) den Walzenspalt (15) erreicht, in einem Öffnungsschritt von einer Kalandrierstellung des Walzenpaares (9) in eine Offenstellung des Walzenpaares (9) verstellt wird,
**dadurch gekennzeichnet, dass** der Fehlstellen-Erkennungsschritt und/oder der Öffnungsschritt, vorzugsweise automatisch oder vollautomatisch, mittels eines Steuer- und/oder Regelsystems der Kalandriervorrichtung (1) durchgeführt wird.

2. Verfahren nach Anspruch 1, **dadurch gekennzeichnet, dass** das Steuer- und/oder Regelsystem einen Datenspeicher (35) aufweist, und dass eine Datenspeicher-Positionsinformation über die Position der Fehlstelle (39) des Elektrodenbandes (37), vorzugsweise in Bezug auf das Elektrodenband (37) und/oder eine Längsrichtung des Elektrodenbandes (37), in dem Datenspeicher (35) gespeichert ist, und dass eine Steuer- und/oder Regeleinheit (31) des Steuer- und/oder Regelsystems die Datenspeicher-Positionsinformation, vorzugsweise bei dem Fehlstellen-Erkennungsschritt und/oder zur Erkennung der Fehlstelle, als Datenspeichersignal abruft und/oder erhält.

3. Verfahren nach Anspruch 1 oder 2, **dadurch gekennzeichnet, dass** das Steuer- und/oder Regelsystem einen Sensor (33) aufweist, und dass die Position der Fehlstelle (39) des Elektrodenbandes (37), vorzugsweise in Bezug auf das Elektrodenband (37) und/oder eine Längsrichtung des Elektrodenbandes (37), mittels des Sensors (33) erkannt, bevorzugt detektiert, wird, und dass eine Sensor-Positionsinformation über die Position der Fehlstelle (39) in dem Fehlstellen-Erkennungsschritt als Sensorsignal von dem Sensor (33) an die Steuer- und/oder Regeleinheit (31) des Steuer- und/oder Regelsystems übermittelt wird.

4. Verfahren nach Anspruch 3, **dadurch gekennzeichnet, dass** der Sensor (33) durch einen Farbsensor oder einen CCD-Sensor gebildet ist, und dass vorzugsweise auf der oder parallel zur zumindest einen Fehlstelle (39) eine Markierung, vorzugsweise eine Farbmarkierung, aufgebracht ist, und dass die Position der Fehlstelle (39) des Elektrodenbandes (37), vorzugsweise in Bezug auf das Elektrodenband (37) und/oder eine Längsrichtung des Elektrodenbandes (37), mittels des Farbsensors oder des CCD-Sensors anhand der auf der Fehlstelle (39) aufgebrachten Markierung erkannt, bevorzugt detektiert, wird.

5. Verfahren nach einem der vorhergehenden Ansprüche, **dadurch gekennzeichnet, dass** das Steuer- und/oder Regelsystem eine Abwickel-Spleißvorrichtung (23) aufweist, und dass die Position der Fehlstelle (39) des Elektrodenbandes (37), vorzugsweise in Bezug auf das Elektrodenband (37) und/oder eine Längsrichtung des Elektrodenbandes (37), mittels der Abwickel-Spleißvorrichtung (23) erkannt, bevorzugt detektiert, wird, und dass eine Spleiß-Positionsinformation über die Position der Fehlstelle (39) in dem Fehlstellen-Erkennungsschritt als Spleißsignal von der Abwickel-Spleißvorrichtung (23) an die Steuer- und/oder Regeleinheit (31) des Steuer- und/oder Regelsystems übermittelt wird.

6. Verfahren nach einem der Ansprüche 2 bis 5, **dadurch gekennzeichnet, dass** das Steuer- und/oder Regelsystem die Steuer- und/oder Regeleinheit (31) aufweist, und dass die Datenspeicher-Positionsinformation als Datenspeichersignal und/oder die Sensor-Positionsinformation als Sensorsignal und/oder die Spleiß-Positionsinformation als Spleißsignal an die Steuer- und/oder Regeleinheit (31) übermittelt wird und, vorzugsweise die Signale, in der Steuer- und/oder Regeleinheit (31) zu einer Ansteuerinformation verarbeitet werden, und dass die Ansteuerinformation als Öffnungssignal an einen Aktuator (17) des Steuer- und/oder Regelsystems übermittelt wird, und dass der Aktuator (17) im Öffnungsschritt mittels des Öffnungssignals derart angesteuert wird, dass das Walzenpaar (9) mittels des Aktuators (17) von der Kalandrierstellung in die Offenstellung verstellt wird.

7. Verfahren nach Anspruch 6, **dadurch gekennzeichnet, dass** der Aktuator (17) mittels des Ansteuersignals derart von der Steuer- und/oder Regeleinheit (31) angesteuert wird, dass das Walzenpaar (9) in die Offenstellung verstellt ist, bevor die zumindest eine Fehlstelle (39) den Walzenspalt (15) erreicht, und/oder dass der Aktuator (17) mittels des Ansteuersignals derart von der Steuer- und/oder Regeleinheit (31) angesteuert wird, dass das Walzenpaar (9) in die Offenstellung verstellt wird, nach dem ein Fehlstellen-Vorlaufbandabschnitt (43) des Elektrodenbandes (37) den Walzenspalt (15) erreicht hat.

8. Verfahren nach einem der vorhergehenden Ansprüche, **dadurch gekennzeichnet, dass** eine Bandgeschwindigkeit des Elektrodenbandes (37) mittels des Steuer- und/oder Regelsystems von einer Kalandrier-Bandgeschwindigkeit bis auf eine Fehlstellen-Bandgeschwindigkeit reduziert ist, bevor die Fehlstelle (39) den Walzenspalt (15) erreicht.

9. Verfahren nach einem der vorhergehenden Ansprüche, **dadurch gekennzeichnet, dass** das Verfahren einen Schließschritt aufweist, und dass bei dem Schließschritt die Steuer- und/oder Regeleinheit (31) ein Schließsignal generiert und an den Aktuator (17) übermittelt, und dass der Aktuator (17) im Schließschritt mittels des Schließsignals derart angesteuert wird, dass das Walzenpaar (9) mittels des Aktuators (17) von der Offenstellung in die Kalandrierstellung verstellt wird, wobei bevorzugt vorgesehen ist, dass der Aktuator (17) mittels des Schließsignals derart von der Steuer- und/oder Regeleinheit (31) angesteuert wird, dass das Walzenpaar in die Kalandrierstellung verstellt ist, sobald ein Fehlstellen-Nachlaufbandabschnitt (45) des Elektrodenbandes (37) den Walzenspalt (15) verlassen hat, und/oder wobei bevorzugt vorgesehen ist, dass der Aktuator (17) mittels des Schließsignals derart von der Steuer- und/oder Regeleinheit (31) angesteuert wird, dass das Walzenpaar (9) von der Offenstellung in die Kalandrierstellung verstellt wird, nach dem die zumindest eine Fehlstelle (39) den Walzenspalt (15) verlassen hat.

10. Kalandriervorrichtung, vorzugsweise zur Durchführung eines Verfahrens nach einem der vorhergehenden Ansprüche, mit:
einem Walzenpaar (9), durch das ein Elektrodenband (37) in einem Kalandrierprozess, vorzugsweise im Endlosverfahren, unter Verdichtung des Elektrodenbandes (37) hindurchführbar ist, und
einem Steuer- und/oder Regelsystem das dazu geeignet und/oder dazu ausgebildet ist, bei dem Kalandrierprozess einen Fehlstellen-Erkennungsschritt, vorzugsweise automatisch oder vollautomatisch, durchzuführen und zumindest eine Fehlstelle (39) auf dem Elektrodenband (37) mittelbar oder unmittelbar zu erkennen, und/oder
wobei das Steuer- und/oder Regelsystem dazu geeignet und/oder dazu ausgebildet ist, das Walzenpaar (9) bei erkannter Fehlstelle, vorzugsweise automatisch oder
vollautomatisch, von einer Kalandrierstellung des Walzenpaares (9) in eine Offenstellung des Walzenpaares (9) zu verstellen.
